(19) Europäisches Patentamt
European Patent Office
Office européen des brevets

(11) **EP 2 512 119 A1**

(12) **EUROPEAN PATENT APPLICATION**

(43) Date of publication:
**17.10.2012 Bulletin 2012/42**

(51) Int Cl.:
*H04N 5/232* (2006.01)   *H04N 5/77* (2006.01)

(21) Application number: **11162293.2**

(22) Date of filing: **13.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Sony Ericsson Mobile Communications AB**
**221 88 Lund (SE)**

(72) Inventor: **Glebe, Dag**
**247 31 Södra Sandby (SE)**

(74) Representative: **Aurell, Henrik**
**Albihns.Zacco AB**
**P.O. Box 4289**
**203 14 Malmö (SE)**

(54) **Camera sound elimination**

(57)     The invention relates to handling disturbing sounds produced by the camera module during video recording. In particular the invention relates to a method for elimination of camera sounds in an audio signal of a video recording comprising the steps of; providing a transient pulse pattern representing a camera sound, comparing the transient sound with the audio signal, detecting if the audio signal correspond to the transient pulse pattern based on the comparison and filtering the transient pulse pattern from the audio signal where a correspondence has been detected. The invention also relates to a corresponding device.

Fig. 4

**Description**

TECHNICAL FIELD

The present invention relates to the field of video recording, and to portable electronic devices that comprise a video recorder. More particularly the present invention relates to handling disturbing sounds produced by the camera module during video recording.

BACKGROUND

It is well known to those skilled in the art of video that the correct focus of an image can be maintained by means of a so-called autofocus arrangement. The speed and accuracy of an auto focusing arrangement are typically superior to a manual adjustment of the focus. Today there exists various ways of driving an autofocus module.
One of the best price competitive autofocus solutions is to use piezo electric drivers. This technology is being more and more common due to it is being very quick, accurate and price competitive. However, the quick and accurate movements of a piezoelectric driver result in distinct, although soft, clicks or pops. Thus, the usage of such drivers in video recordings results in that audible clicks are emitted when the autofocus is in operation. These sounds can in some situations be perceived as disturbances in soft parts of the recorded files. These disturbances may impact the user experience. Previous drivers e.g. electro mechanically driven, did not have this problem.
One known way of eliminating these sounds has been to turn off the sound in video capture mode. Another known solution is to use a directed microphone, pointing away from the camera module or an equaliser. However, an equaliser will not only filter the camera sound, but also parts of the recorded sound, causing distortion.

SUMMARY OF THE INVENTION

With the above description in mind, then, an aspect of the present invention is to provide a way of eliminating disturbing camera sounds during video recording. This is achieved by comparing the sound file of a video recording with a reference pattern representing the disturbing camera sound. In points with high correspondence between the sound file and the reference, the sound file is filtered in order to remove the disturbances.
More specifically the invention relates to an electronic device comprising:

- a camera module adapted to capture a video signal,
- a microphone adapted to record an audio signal,
- reference means adapted to provide a transient pulse pattern representing a sound caused by the camera module,
- comparator means adapted to compare the transient pulse pattern with the audio signal,
- detector means adapted to detect, based on the comparison, if the audio signal corresponds to the transient pulse pattern and
- filtering means adapted to filter the audio signal where a correspondence has been detected by the detector, such that the transient pulse pattern is removed from the audio signal.

According to one aspect of the invention it relates to an electronic device, wherein the comparator means is adapted to calculate a cross correlation in time domain.
According to one aspect of the invention it relates to an electronic device, wherein the filter means is a subtractive filter, subtracting the transient sound pattern from the audio signal.
According to one aspect of the invention it relates to an electronic device, wherein the comparator means is adapted to calculate a spectral coherence calculation.
According to one aspect of the invention it relates to an electronic device, wherein the filter means is a spectral filter, subtracting the transient sound pattern from the audio signal.
According to one aspect of the invention it relates to an electronic device, wherein the sound to be eliminated is a sound from an autofocus driver is the camera module.
According to one aspect of the invention it relates to an electronic device, wherein the detector comprises means for comparing a comparison value with a predetermined threshold value.
According to one aspect of the invention the electronic device is a mobile phone.
According to another aspect of the invention it relates to method for elimination of camera sounds in an audio signal of a video recording comprising the steps of:

- providing a transient pulse pattern representing a camera sound,
- comparing the transient sound with the audio signal,

- detecting, based on the comparison, if the audio signal correspond to the transient pulse pattern and
- filtering the transient pulse pattern from the audio signal where a correspondence has been detected.

According to one aspect of the invention it relates to a method for elimination of camera sounds in an audio signal, wherein the comparison comprises a cross correlation in time domain.

According to one aspect of the invention it relates to a method for elimination of camera sounds in an audio signal, wherein the filtering comprises subtracting the transient sound pattern from the audio signal.

According to one aspect of the invention it relates to a method for elimination of camera sounds in an audio signal, wherein the comparison comprises a spectral coherence calculation.

According to one aspect of the invention it relates to a method for elimination of camera sounds in an audio signal, wherein the filtering comprises spectral filtering of the audio signal.

According to one aspect of the invention it relates to a method for elimination of camera sounds in an audio signal, wherein the detection involves comparing a comparison value with a predetermined threshold value.

According to one aspect of the invention it relates to a computer program comprising computer readable instructions adapted to, when executed, perform any of the abovementioned methods.

According to one aspect of the invention a robust and powerful approach to remove camera sounds in an audio signal is provided, as the filtering will only be activated when the correspondence is above a certain threshold value. Hence, filtering will only be activated when the autofocus distortion is audible, e.g. due to the absence of extraneous sounds.

BRIEF DESCRIPTION OF THE DRAWINGS

The present invention will be more readily understood through the study of the following detailed description of the embodiments/aspects together with the accompanying drawings, of which:

Fig. 1a shows a portable communication device comprising a video recorder seen from the front.

Fig. 1b shows a portable communication device comprising a video recorder seen from the back.

Fig. 2 shows a sound file comprising a typical disturbance caused by a piezoelectric autofocus driver.

Fig. 3 illustrates a mobile portable communication device comprising means for elimination of camera sounds.

Fig. 4 illustrates the algorithm for elimination of camera sounds in a flow chart.

Figs. 5a to 5e illustrate the elimination of camera sounds in the time domain.

Figs. 6a to 6c illustrate the elimination of camera sounds in the frequency domain.

It should be added that the following description of the embodiments is for illustration purposes only and should not be interpreted as limiting the invention exclusively to these embodiments/aspects.

DETAILED DESCRIPTION

The present invention relates in general to video recording. In particular, the invention relates to portable communication devices comprising a video recorder. However, it should be appreciated that the invention is as such equally applicable to any device comprising a video recorder facing the problem of autofocus sound in the audio recordings.

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference signs refer to like elements throughout.

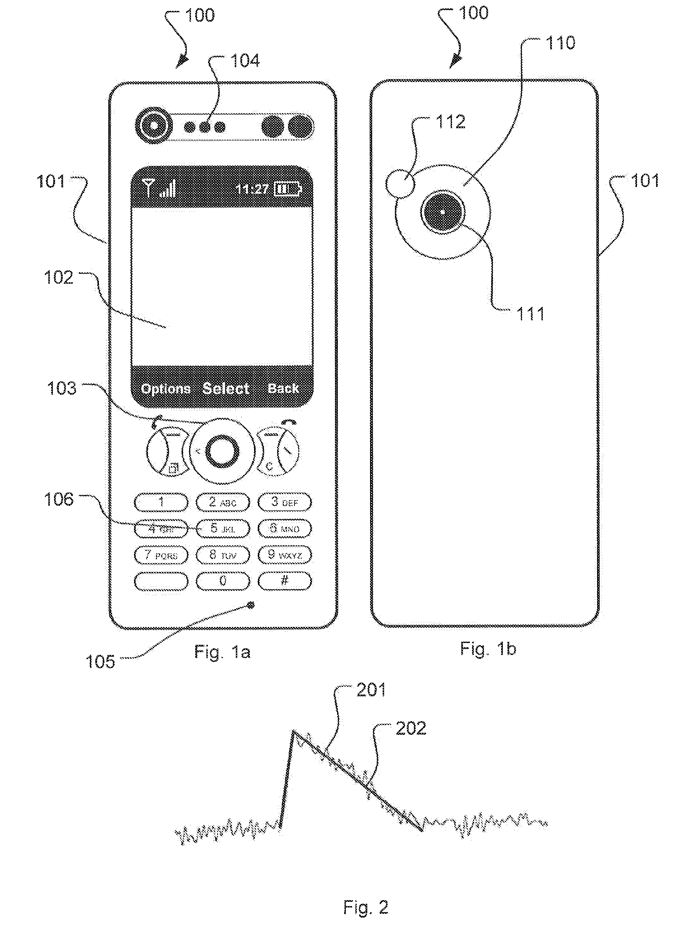

Figure 1a shows an ordinary portable communication device seen from the front. In this case the mobile phone 100, comprises a casing 101, a display area 102, and means 103 for navigating among items (not shown) displayed in the display area. The mobile phone typically also comprises a speaker 104, a microphone 105 and at least one camera 106.

The mobile phone 100 may also comprise other elements normally present in such a device, such as a keypad 106, a photo sensor (e.g. ambient light), a infrared light (IR) sensor, infrared light emitting diode (IR LED), processing means (not shown), memory means (not shown), one or more accelerometers (not shown), a vibration device (not shown), an AM/FM radio transmitter and receiver (not shown), a digital audio broadcast transmitter and receiver (not shown), a Bluetooth device (not shown), an antenna module (not shown), etc.

Figure 1b shows the backside of the mobile phone 100. The backside houses a camera module 110, comprising a lens 111, and a small mirror 112 used for aiming when photographing one self. The camera module 110 typically comprises an autofocus solution. The autofocus solutions may be using piezoelectric drivers. This technology is being very quick and accurate.

However, the quick and accurate movements of piezoelectric drivers result in audible clicks or pops. Due to the reduced size of mobile phones, the distance between the camera module 110 and the microphone 105 is limited. Hence, during video recording, the clicks or pops may be recorded by the microphone 105, causing disturbing noise in the audio signal.

The backside may also house other device not shown in the figure such as a speaker, microphone, buttons, selection wheels, and other gadgets used when operating the device.

Figure 2 illustrates an audio signal *x* with the typical pulse emitted from a piezo driven autofocus mechanism. The diagram shows sound pressure as a function of time. The thin line 201 shows a measured response with superposed noise of lower rms amplitude. On top of the measured pulse a thick line 202 is outlined, showing the typical response.

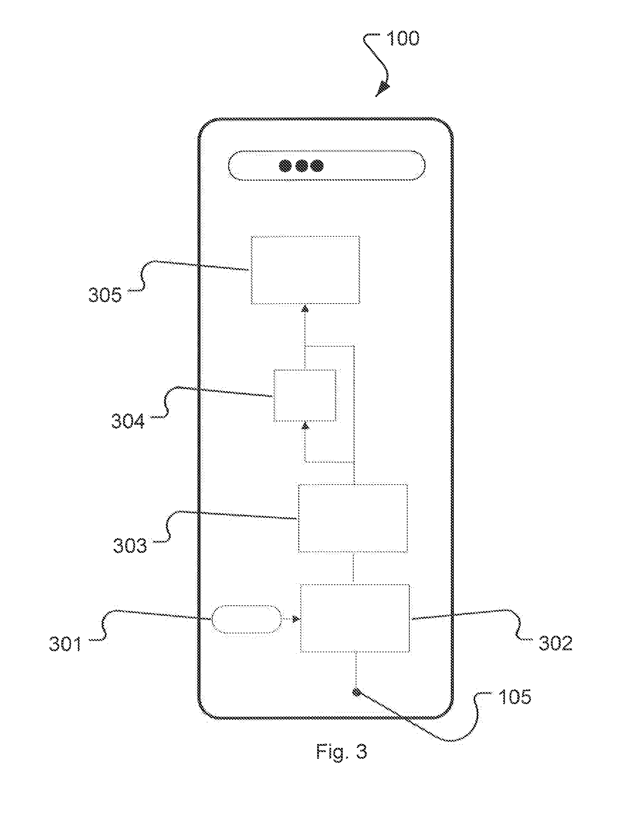

Figure 3 illustrates a mobile phone 100 as described in figure 1 comprising means to eliminate camera sounds in a video recording. Even if this example illustrates a mobile phone 100, it will be appreciated that the invention may be implemented in any kind of electronic device.

The mobile phone 100 further comprises reference means 301, a comparator 302, a detector 303, a filter 304 and a memory 305.

The reference means 301 is adapted to provide a transient pulse pattern *y* representing a sound caused by the camera module 110, e.g. a autofocus sound. The transient pulse pattern *y* corresponds to the typical response 202 shown in figure 2. The transient pulse pattern *y* may e.g. be read out from a memory in the mobile phone 100.

The comparator 302 is adapted to compare the audio signal *x* and the reference signal *y*. The comparator 302 may operate on blocks of the audio signal *x.* The comparison may be in the time domain, e.g. a circular correlation. The circular correlation may result in a cross correlation value.

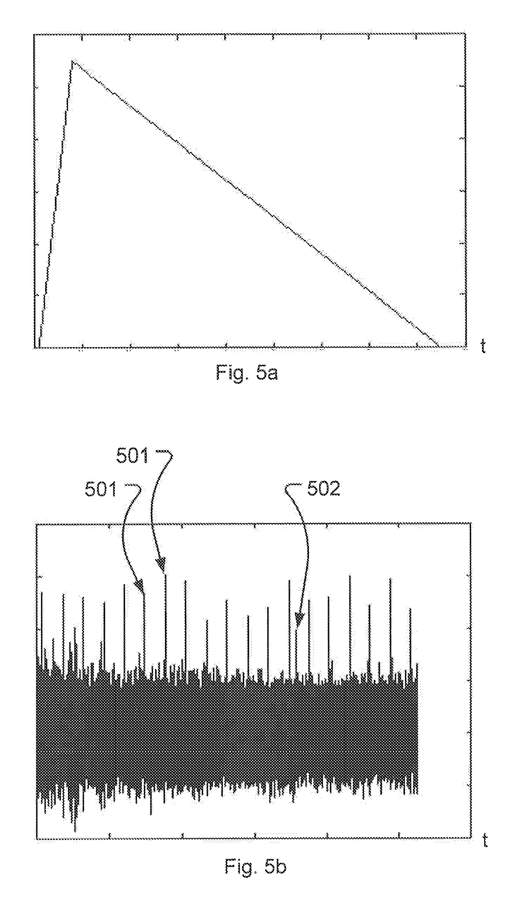

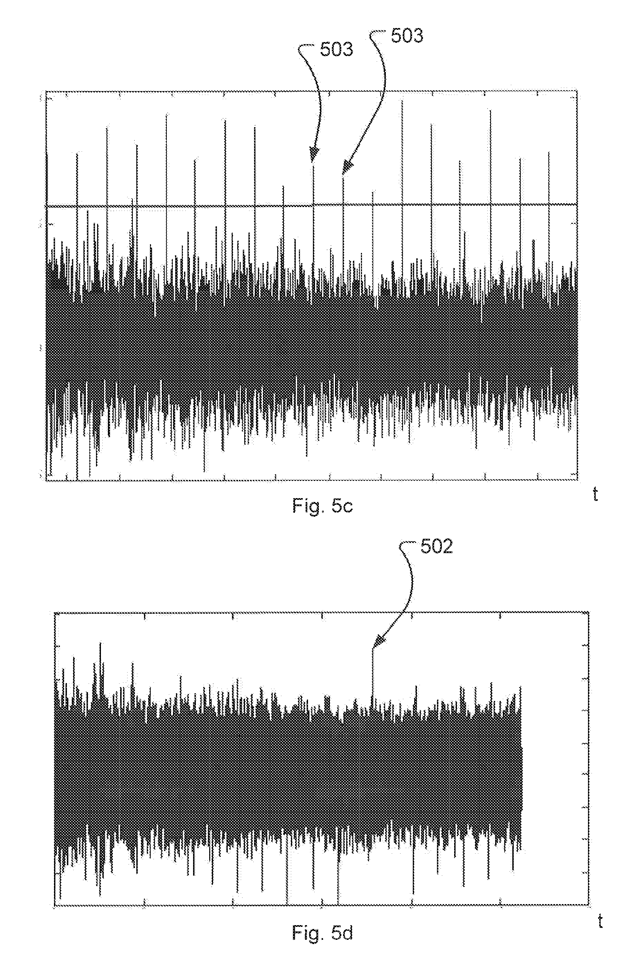

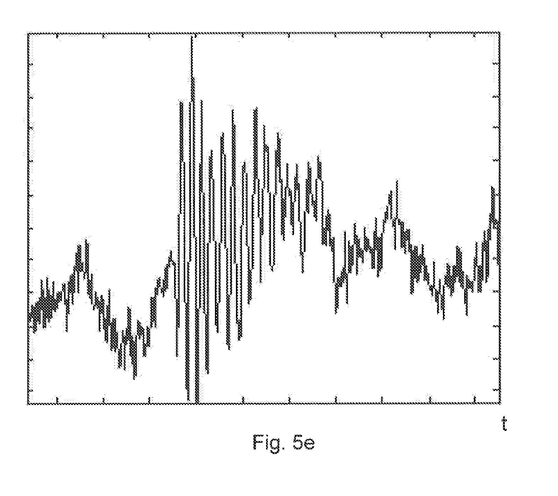

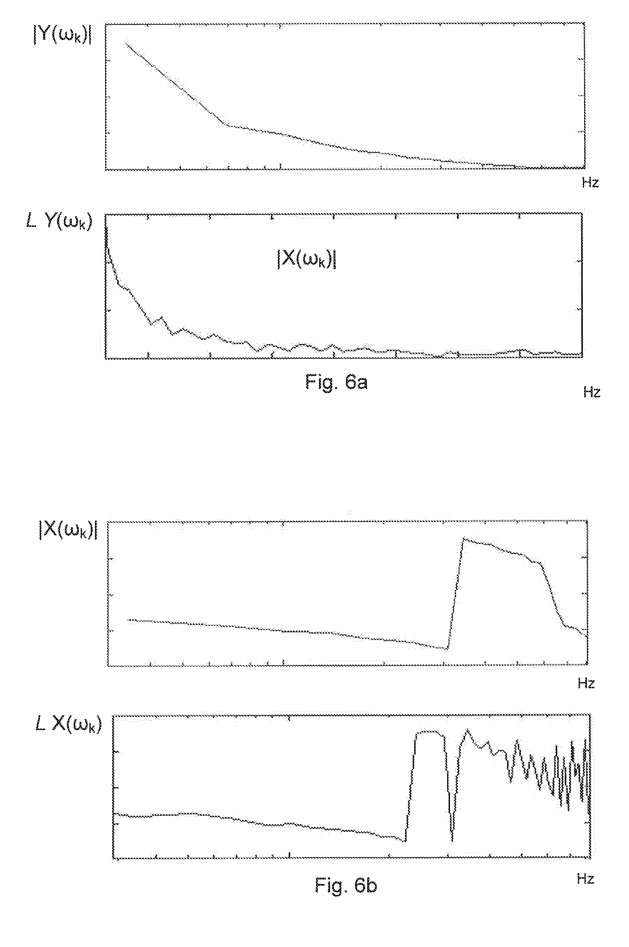

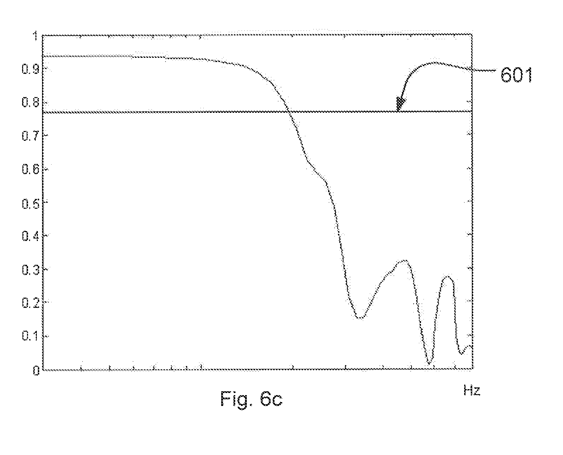

The comparison may also be made in the frequency domain e.g. a FFT based approach. These operations will be further described with reference to figures 5 and 6.

The detector 303 is adapted to detect a correspondence between the audio signal x and the transient pulse pattern y. The detector 303 may e.g. be adapted to detect if a comparison value e.g. the cross correlation, is above a predetermined threshold. The threshold value may be pre-programmed or adjusted by the user. The detector 303 may detect correspondence in different blocks of the audio signal *x.* Thereby blocks of the audio signal, where the audio signal corresponds to the transient pulse pattern, are identified.

The filter 304 is adapted to filter the audio signal *x* such that the transient pulse pattern *y* is removed from the audio signal *x.* The filter 304 may perform filtering only in blocks of the audio signal *x* where a correspondence is detected. The filter 304 may be a subtractive filter that subtracts the transient pulse pattern *y* from the audio signal *x.* The filter 304 may also be a spectral filter operating in the frequency domain. The filtered audio signal *x* is stored in a memory 305.

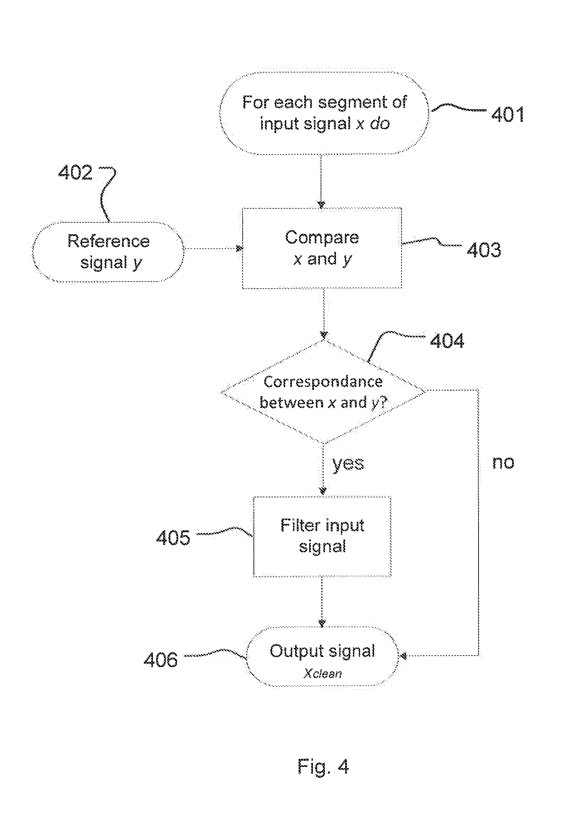

Referring to Figure 4 the basic principle for elimination of an autofocus sound will now be briefly described. It will be appreciated that even if this method is directed to elimination of an autofocus sound, the method may be adapted to eliminate any kind of undesired camera sound during video recording, by simply using another transient pulse response *y.*

The method may be performed in real-time during video recording or later, on a previously recorded and stored audio file. The method begins in block 401 with the input of an audio signal *x* recorded by the microphone 105. If the elimination is done in real-time, blocks of the audio signal *x* are temporarily buffered before camera sound elimination. The method will operate on blocks of the audio signal *x.* Even if the method is not performed in real-time the method may operate on blocks of the audio signal *x* in order to avoid filtering of blocks where there is no disturbance. Thereby, the recorded audio will be affected as little as possible. The size of the blocks may vary, but a minimum size for good detection of the camera sound may be twice the length of the transient pulse response *y.* If the operation is done after recording, the comparison may be made for one big block constituting the entire audio signal *x.* The following steps will be executed for each block of the audio signal *x.*

At the same time as the audio signal *x* is provided, a transient pulse pattern *y* representing the autofocus sound is also provided by the reference means 301, step 402. The transient pulse pattern *y* may e.g. be read from an internal memory.

In step 403 the audio signal *x* is compared with the transient pulse response *y.* The comparison is done by the comparator 302. The comparison may e.g. be a cross correlation or a spectral coherence.

Step 404 illustrates the detection of blocks where the audio signal *x* corresponds to the transient pulse pattern *y* from the comparison. Detection is made by detector 303. Detection may be made by comparing a comparison value with a predetermined threshold value. The comparison value may be a cross correlation $r_{xy}$ or a coherence function $C_{xy}(\omega)$.

The comparison value may be a normalized value between 0 and 1. The threshold value may be adjusted by the user in order to achieve desired filtering level.

If a correspondence between the audio signal $x$ and the transient pulse pattern $y$ is detected in a block of the audio signal $x$ the audio signal $x$ is filtered by filter 304 in order to remove the transient pulse pattern $y,$ as illustrated in step 405. If no correspondence is detected, no filtering is made. Thereby, the audio signal $x$ may only be filtered when necessary.

The method for elimination of autofocus sound in video recordings in the time domain will now be described in more detail with reference to figures 5a to 5e.

Figure 5a shows a typical autofocus transient pulse pattern $y$ reference file. The diagram shows sound pressure as a function of time.

Figure 5b shows a recorded audio file $x$ comprising noise of lower rms amplitude superimposed with autofocus bursts. The diagram shows sound pressure as a function of time. In the audio file $x,$ the sound from the autofocus driver are clearly visible as peaks 501. The audio file also comprises another sound 502, which is not caused by the autofocus driver and therefore has a different pulse shape, shown in figure 5e.

Figure 5c shows the cross correlation of the audio file and the transient pulse response $y.$ The cross correlation is calculated as:

$$r_{xy} = \frac{1}{N} \sum_{m=0}^{N-1} \overline{x(m)} y(m+n), \qquad n = 0,1, ... N-1$$

In the points of the audio file, were there was a disturbance caused by the autofocus driver, the cross correlation $r_{xy}$ i.e. the correspondence between x and y is high 503. The detection of correspondence is then based on comparison with a threshold value $r_{tr},$ which is illustrated in figure 5c.

Hence, the filtering is done in blocks where $r_{xy} > r_{tr}.$ In these blocks the point $t_{corr}$ with the highest correlation is identified. The transient pulse pattern $y$ is then subtracted from the audio file $x.$ Hence, the time then the filtered signal $x_{clear}$ is defined by:

$$x_{clear}(t) = x(t) - y(t + t_{corr}), \qquad \text{if } r_{xy} \geq r_{thres}$$

$$x_{clear}(t) = x(t), \qquad \text{if } r_{xy} < r_{thres}$$

The filtered audio file $x_{clear}(t)$ is shown in figure 5d. As can be seen all the disturbances 501 caused by the camera module are removed. However, the peak 502 is undisturbed by the process. Hence, sounds that do not match the transient pulse response will be undisturbed by the process.

The method for elimination of autofocus sound in video recordings in the frequency domain will now be described in more detail with reference to Figures 6a to 6c.

When carrying out the method in the frequency domain the transient pulse response and the audio file are transformed to the frequency domain. This is typically done by a fast fourier transform (FFT).

Figure 6a shows the amplitude spectrum (above) and the phase spectrum (below) of the FFT $Y(\omega_k)$ of the transient pulse pattern $y.$ Figure 6b shows the amplitude spectrum (above) and the phase spectrum (below) of the FFT $X(\omega_k)$ of an audio signal $x$ comprising noise of lower rms amplitude superimposed with autofocus bursts.

In this example the comparison 403 is made by a function related to cross correlation i.e. the coherence function. Figure 6c shows the coherence between FFT of the audio signal $x$ and the FFT of the transient pulse response $y.$ The cross-spectral density is defined by:

$$R_{xy}(\omega) = \frac{\overline{X(\omega_k)}Y(\omega_k)}{N}$$

Then, the Coherence is defined by the cross-spectral density normalised with respect to the power spectral densities as:

$$C_{xy}(\omega) \triangleq \frac{|R_{xy}(\omega)|^2}{R_x(\omega)R_y(\omega)}$$

In practice, these quantities can be estimated by time-averaging

$$\overline{X(\omega_k)}Y(\omega_k)$$

,

$$\overline{|X(\omega_k)|^2}$$

and,

$$\overline{|Y(\omega_k)|^2}$$

over successive signal blocks.

In blocks where there is a disturbance caused by the autofocus driver, the coherence i.e. correspondence between x and y is high. The detection of high correspondence may be done by comparing $C_{xy}$ with a threshold value $C_{three}$ 601, disclosed in figure 6c. Hence, blocks where $C_{xy}$ exceeds $C_{stores}$ the audio signal $x$ is filtered. The spectral filter function $H(\omega)$ is then defined such that the complex frequency response of the transient pulse pattern $y$ is subtracted from the audio signal $x$. The exact coefficients of $H(\omega)$ will be defined during implementation.

The camera sound elimination may be used while recording different types of audio signals. If the amplitude of the recorded audio signal is high, it is possible that the detector will not be able to detect the camera sounds. However, in this case, the camera sound is not audible and will not disturb the user.

According to one aspect of the invention is the filtering is turned off at high sound levels in order to avoid disturbing the recorded sound. In this was computer capacity will be saved.

According to one aspect of the invention, the degree of filtering or suppression may be set as a function of correlation value, which would remove any trace of the disturbance, even not audible residuals. If so, the algorithm may for instance be combined with a simple sound level threshold to make it utterly fail-safe for any audible algorithm induced disturbances, yet being extremely simple to implement.

According to one aspect of the invention, since the recorded time signal is available, the "click/pop washing" can be further enhanced gradually to the degree of one's choice.

The invention is not limited to the embodiment described above, but may be modified without departing from the scope of the claims below.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

The foregoing has described the principles, preferred embodiments and modes of operation of the present invention. However, the invention should be regarded as illustrative rather than restrictive, and not as being limited to the particular embodiments discussed above. The different features of the various embodiments of the invention can be combined in other combinations than those explicitly described. It should therefore be appreciated that variations may be made in those embodiments by those skilled in the art without departing from the scope of the present invention as defined by the following claims.

**Claims**

1.    An electronic device (100) comprising:

- a camera module (110) adapted to capture a video signal,
- a microphone (105) adapted to record an audio signal,
- reference means (301) adapted to provide a transient pulse pattern representing a sound caused by the camera module (110),
- comparator means (302) adapted to compare the transient pulse pattern with the audio signal,
- detector means (303) adapted to detect, based on the comparison, if the audio signal corresponds to the transient pulse pattern and
- filtering means (304) adapted to filter the audio signal, where a correspondence has been detected by the detector, such that the transient pulse pattern is removed from the audio signal.

2.    An electronic device (100) according to claim 1, wherein the comparator means (302) is adapted to calculate a cross correlation in time domain.

3.    An electronic device (100) according to claim 2, wherein the filtering means (304) is a subtractive filter, subtracting the transient sound pattern from the audio signal.

4.    An electronic device (100) according to claim 1, wherein the comparator means (302) is adapted to calculate a spectral coherence calculation.

5.    An electronic device (100) according to claim 4, wherein the filter means (304) is a spectral filter, subtracting the transient sound pattern from the audio signal.

6.    An electronic device (100) according to any of the preceding claims, wherein the sound is a sound from an autofocus driver is the camera module (110).

7.    An electronic device (100) according to any of the preceding claims, wherein the detector comprises means for comparing a comparison value with a predetermined threshold value.

8.    An electronic device (100) according to any of the preceding claims, wherein the electronic device (100) is a mobile phone.

9.    A method for elimination of camera sounds in an audio signal of a video recording comprising the steps of:

- providing a transient pulse pattern representing a camera sound,
- comparing the transient sound with the audio signal,
- detecting, based on the comparison, if the audio signal correspond to the transient pulse pattern and
- filtering the transient pulse pattern from the audio signal where a correspondence has been detected.

10.    A method for elimination of camera sounds in an audio signal according to claim 9, wherein the comparison comprises a cross correlation in time domain.

11.    A method for elimination of camera sounds in an audio signal according to claim 10, wherein the filtering comprises subtracting the transient sound pattern from the audio signal.

12.    A method for elimination of camera sounds in an audio signal according to claim 9, wherein the comparison comprises a spectral coherence calculation.

**13.** A method for elimination of camera sounds in an audio signal according to claim 12, wherein the filtering comprises spectral filtering of the audio signal.

**14.** A method for elimination of camera sounds in an audio signal according to any of the preceding claims 9-13, wherein the detection involves comparing a comparison value with a predetermined threshold value.

**15.** A computer program comprising computer readable instructions adapted to, when executed, perform the method claimed in any of claims 9-14.

Fig. 1a

Fig. 1b

Fig. 2

Fig. 3

For each segment of
input signal x *do* — 401

402

Reference
signal y

Compare
x and y — 403

404

Correspondance
between x and y?

yes                                          no

405 — Filter input
signal

406 — Output signal
*Xclean*

Fig. 4

Fig. 5a

Fig. 5b

503    503

Fig. 5c

502

Fig. 5d

Fig. 5e

$|Y(\omega_k)|$

Hz

$L\ Y(\omega_k)$

$|X(\omega_k)|$

Fig. 6a

Hz

$|X(\omega_k)|$

Hz

$L\ X(\omega_k)$

Fig. 6b

Hz

Fig. 6c

**European Patent Office**

Europäisches
Patentamt
European
Patent Office
Office européen
des brevets

# EUROPEAN SEARCH REPORT

Application Number

EP 11 16 2293

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/032390 A1 (LEE CHANG-BAE [KR] ET AL) 10 February 2011 (2011-02-10) * paragraphs [0009] - [0015], [0 56] - [0058], [0 91] - [0103]; figures 1,3-6,9 * | 1-15 | INV. H04N5/232 H04N5/77 |
| X | US 2008/124049 A1 (CHOU CHAN-MIN [TW] ET AL) 29 May 2008 (2008-05-29) * paragraphs [0008] - [0015], [0021] - [0029]; claim 1; figures 1-3 * | 1-15 | |
| A | JP 1 146471 A (CANON KK) 8 June 1989 (1989-06-08) * abstract; figure 4 * | 1-15 | |
| A | JP 7 240864 A (RICOH KK) 12 September 1995 (1995-09-12) * abstract * | 1-15 | |
| A | EP 1 549 060 A2 (SONY CORP [JP]) 29 June 2005 (2005-06-29) * figures 1-8 * | 1-15 | TECHNICAL FIELDS SEARCHED (IPC)<br><br>H04N |

The present search report has been drawn up for all claims

| Place of search | Date of completion of the search | Examiner |
|---|---|---|
| Munich | 2 August 2011 | Trimeche, Mejdi |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 11 16 2293

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2011

| Patent document cited in search report | | Publication date | Patent family member(s) | | Publication date |
|---|---|---|---|---|---|
| US 2011032390 | A1 | 10-02-2011 | KR 20110014452 A | | 11-02-2011 |
| US 2008124049 | A1 | 29-05-2008 | NONE | | |
| JP 1146471 | A | 08-06-1989 | JP 2531713 B2 | | 04-09-1996 |
| JP 7240864 | A | 12-09-1995 | NONE | | |
| EP 1549060 | A2 | 29-06-2005 | CN 1638464 A | | 13-07-2005 |
| | | | JP 3979384 B2 | | 19-09-2007 |
| | | | JP 2005184667 A | | 07-07-2005 |
| | | | KR 20050063681 A | | 28-06-2005 |
| | | | US 2005157177 A1 | | 21-07-2005 |

EPO FORM P0459

For more details about this annex : see Official Journal of the European Patent Office, No. 12/82